# EUROPÄISCHE PATENTSCHRIFT

(11) **EP 0 944 897 B1**
(45) Veröffentlichungstag und Bekanntmachung des Hinweises auf die Patenterteilung: **05.12.2001**
(21) Anmeldenummer: 97937455.0
(22) Anmeldetag: 14.08.1997
(51) Int. Cl.: G09B 19/02, G09B 3/04

(54) **DIDAKTISCHER LERNHILFSAPPARAT, VORZUGSWEISE ZUR ANWENDUNG IN DER GRUNDSCHULE**
DIDACTIC LEARNING DEVICE, PREFERABLY FOR USE IN PRIMARY SCHOOLS
APPAREIL D'APPRENTISSAGE DIDACTIQUE, A UTILISER DE PREFERENCE A L'ECOLE PRIMAIRE

(30) Priorität: 17.08.1996 DE 19633198
(43) Veröffentlichungstag der Anmeldung: 29.09.1999
(73) Patentinhaber: Wagner, Raimonde, 06268 Querfurt (DE); Schumann, Karl-Heinz, 06268 Querfurt (DE); Schulz, Hilmar, 06179 Dornstedt (DE)
(72) Erfinder: Wagner, Raimonde, 06268 Querfurt (DE); Schumann, Karl-Heinz, 06268 Querfurt (DE); Schulz, Hilmar, 06179 Dornstedt (DE)
(74) Vertreter: Voigt, Wolf-Rüdiger
(86) Internationale Anmeldenummer: DE9701745
(87) Internationale Veröffentlichungsnummer: WO9808209

(56) Entgegenhaltungen:
- EP-A- 0 742 540
- DE-B- 1 197 654
- US-A- 2 911 742
- US-A- 3 783 531
- US-A- 3 930 321

## Beschreibung

Der didaktische Lernhilfsapparat soll vorzugsweise von Kindern bis zur 4. Klasse benutzt werden. Die Nutzung als Lernhilfsmittel soll möglichst leicht einen langanhaltenden Zugang zum erlernenden Stoff ermöglichen. Darüber hinaus soll auch ein spielerischer Einsatz erfolgen, um das auf bestimmten Gebieten erlernte Wissen zu prüfen bzw. zu festigen.

Es sind verschiedene Lernhilfsmittel bekannt, die im Unterricht zur Anwendung kommen können. In diesem Zusammenhang soll das LÜK-Kontrollgerät mit der dazugehörigen Aufgabensammlung genannt werden. Es wird auf die als Buch herausgegebene Aufgabensammlung verwiesen:
"Einmaleins. Das große Einmaleins Bruchrechnung", Heinz Vogel Verlag Braunschweig, Auflage 1985.
Mit Hilfe des LÜK-Kontrollgerätes werden die Lösungen kontrolliert. Die Arbeitsweise erfolgt, indem nach Lösung einer Aufgabe ein Plättchen einem bestimmten Feld im Boden des Gerätes zugeordnet wird. Die Plättchen sind auf der einen Seite mit einer Zahl, auf der anderen Seite mit dem Teil eines Musters versehen.
Wenn alle Aufgaben gelöst sind, liegen alle Plättchen auf der Bodenplatte des Gerätes. Nach Schließen des Gerätes, Herumdrehen und Öffnen von der Rückseite zeigt die Rückseite der Plättchen ein in der Aufgabensammlung vorgegebenes Muster, wenn alle Aufgaben richtig gelöst sind. Die vorgegebenen Trainingsreihen bieten die Möglichkeit, den Lernstoff auch zu Hause einzuüben und selbständig zu kontrollieren.

Ein maßgeblicher Nachteil dieses Kontrollgerätes ergibt sich daraus, daß die Selbstkontrolle erst nach dem Lösen aller Aufgaben möglich ist. Es muß nämlich erst der ganze Aufgabenkomplex gelöst werden. Das einzelne Überdenken einer falsch gerechneten Aufgabe ist nicht möglich, denn der Fehler wird erst erkannt, wenn das "Lösungsmuster" dem vorgegebenen Muster in der Aufgabensammlung entspricht.
Weiterhin wird als nachteilig angesehen, daß bei falschen Ergebnissen vom Schüler das Ergebnis ohne nochmaliges Rechnen korrigiert werden kann, indem lediglich das "Lösungsmuster" dem Muster gemäß Aufgabensammlung angepaßt wird. Diese Kritik an dem hier beschriebenen LÜK-Kontrollgerät ergibt sich aus den pädagogischen Erkenntnissen beim Umgang von Schulkindern mit dem Kontrollgerät. Hier soll noch angemerkt werden, daß Puzzlespiele in den letzten Jahren viel an Beliebtheit gewonnen haben und Schulkinder diesbezüglich erstaunliche Fertigkeiten besitzen. Es ist daher möglich, einen Aufgabenkomplex von z.B. 24 Aufgaben zu lösen, indem die Rückseiten der Plättchen auf der Bodenplatte des Kontrollgerätes gleich im Sinne eines Puzzlespieles angeordnet werden. Damit wären alle 24 Aufgaben richtig "gelöst" - ohne über eine einzige Aufgabe in mathematischer Hinsicht nachzudenken.
Weiterhin ist es von großem Nachteil, daß mit einer Doppelsymbolik gearbeitet werden muß, die gerätebedingt ist. Das heißt, wenn der Lernende gemäß aufgenommenen Plättchen 5 die Aufgabe Nr. 5 gelöst hat, wenn sich beispielsweise als Ergebnis "85" ergibt, muß der Lernende im Boden des Gerätes die 85 suchen. Die Zahl 85 befindet sich aber im Feld 13. Nach dem Lösen der Aufgabe ist somit nochmals Konzentration erforderlich zum Suchen auf dem Zahlenfeld im Geräteboden. Die Aufgabe Nr. 5 (entspricht dem Plättchen Nr. 5) führt zur Lösung 85. Das Plättchen Nr. 5 muß aber dem Feld 13 zugeordnet werden. Die Zahlen 85 und 13 stellen eine Doppelsymbolik dar.
Ein ebenfalls den Stand der Technik charakterisierendes Arbeitsmittel ist das LOGICO-System. In einer Broschüre zur Produktvorstellung (Neuer Finkenverlag, Arbeitsmittel - Lernspiele - Bücher. 1. Halbjahr 1997) wird beispielsweise auf Seite 5 vorgestellt, wie dieses individuelle Lernsystem in der Grundschule im Fach Mathematik verwendet werden soll.

Der Schüler schiebt eine Übungskarte mit Aufgaben in das Gerät, und er löst die Aufgabe, indem er den richtigen Lösungen, die mit Farbpunkten versehen sind, die richtigen farblich gestalteten Schiebeknöpfe gemäß Aufgabe zuordnet. Ist der Schüler bei einer Aufgabe nicht sicher oder möchte sich selbst kontrollieren, schiebt er die Karte mit der Rückseite in das Gerät. Stimmen die Farbpunkte der Karte mit den Schiebeknöpfen der Lösungen farblich überein, ist die Lösung richtig. Ist eine Aufgabe falsch gelöst, kann eine Korrektur nur erfolgen, wenn sich der Schüler schon beim Lösen nicht sicher war. Anderenfalls sind auch falsche Ergebnisse erst sichtbar, wenn alle Aufgaben gelöst sind und auf der Kartenrückseite verwendete Farbpunkte mit den Schiebeknöpfen für ein bestimmtes Ergebnis nicht übereinstimmen. Dieses LOGICO-System kann auch für das Fach Deutsch eingesetzt werden (z.B. sollen die richtigen Umlaute bei bestimmten Wörtern eingesetzt werden).

Es soll hier nicht weiter das LOGICO-System erläutert werden, jedoch sollen als kritische Anmerkungen zum Stande der Technik hervorgehoben werden:
Der Schüler merkt das falsche Lösen einer Aufgabe erst, nachdem alle Aufgaben einer Übungskarte (z.B. 10 Aufgaben) fertig sind bzw., wie schon gesagt, wenn der Schüler seine spezielle Lösung anzweifelt und fallbezogen kontrolliert. Im Grunde genommen handelt es sich um den gleichen Nachteil wie beim LÜK-System. Erst nach der Lösung eines Aufgabenkomplexes werden die Ergebnisse bezüglich "richtig" oder "falsch" erkennbar. Der Schüler merkt somit beim Lösen der Aufgabe seinen Fehler nicht und muß ihn zwangsläufig erst einmal übergehen, um dann später ein nicht gleich als falsch erkanntes Ergebnis zu korrigieren.
Auch kommt es immer wieder vor, daß die Schüler von der Rückseite der Karte die richtige Farbe abgucken und somit durch "Schummeln" mit dem Bilden richtiger Farbkombinationen zu richtigen Ergebnissen kommen. Ähnlich wie vorher beim LÜK-System - dort konnte die Richtigkeit durch Mustervorgaben kontrolliert bzw. korrigiert werden - kann beim LOGICO-System durch abgeguckte Farbkombination ohne eigentliche Leistung des Schülers ein richtiges Ergebnis vorgelegt werden.

Es ist auch beim LOGICO-System der vorher beim LÜK-Kontrollgerät erläuterte Nachteil vorhanden, der Nachteil der Arbeit mit der Doppelsymbolik. Das bedeutet: Der Lernende löst eine Aufgabe, wobei der Aufgabe ein Farbsymbol zugeordnet ist. Nunmehr muß nach Lösung der Aufgabe aus einer Anzahl von Schiebeknöpfen mit Farbsymbol derjenige Schiebeknopf mit Farbsymbol ausgewählt werden, welcher der Farbsymbolik der Aufgabe entspricht. Dieser ausgewählte Schiebeknopf wird der Ergebniszahl zugeordnet, wobei sich die Ergebniszahlen in bewußt ungeordneter Reihenfolge am Geräterand befinden. Die Arbeit mit der Doppelsymbolik bedeutet hier somit die Auswahl des richtigen entsprechend farblich gestalteten Schiebeknopfes und die Zuordnung dieses Schiebeknopfes zu einer Zahl, der Ergebniszahl, die aus einer Anzahl ungeordneter Zahlen ausgewählt werden muß.

Es ist auch schon gemäß DE-OS 14 97 674 ein Kontrollbrett für Rechenergebnisse bekannt geworden, welches zur Selbstkontrolle von Rechenergebnissen nach in einem Aufgabenheft vorgegebenen Aufgaben dienen soll. Eine Lochplatte und eine darunter befindliche Schablone mit einem Lochsystem werden durch Verschieben der Schablone soweit in Deckungsgleichheit gebracht, daß ein Fallstift bei richtiger Lösung die in Deckungsgleichheit gebrachten Löcher passiert. Maßgeblich ist weiterhin, daß ein mit Löchern versehenes Ergebnisblatt auf der Lochplatte angeordnet ist und den Löchern Zahlen als Ergebnisse zugeordnet sind. Die Arbeitsweise mit dem Kontrollbrett erfolgt, indem gemäß zugehöriger Aufgabensammlung 20 Aufgaben, z. B. von Nr. 1 bis 20 gelöst werden. Dann wird unter 20 Fallstiften der Fallstift Nr. 17 ausgewählt, wenn Aufgabe Nr. 17 gelöst wurde. Auf dem Ergebnisblatt muß das Loch ausgewählt werden, welches dem Ergebnis entspricht, welches beispielsweise mit der Ergebniszahl 18 versehen ist. Der Fallstift Nr. 17 muß somit in das Ergebnisloch 18 gesteckt werden.

Natürlich ist bei der Benutzung des Kontrollbrettes ebenfalls ein "Schummeln" möglich, vor allem, wenn nur wenige Aufgaben falsch gelöst wurden. Mit dem Fallen der Stifte in den Löchern, wo die Aufgaben richtig gelöst wurden, ist die Schablone fixiert. Die nicht durchgefallenen Stifte werden entfernt und ein Durchblick durch Lochplatte und Schablone zeigt, durch welche deckungsgleichen Löcher die Fallstifte gesteckt werden können.

Es ist auch beim Kontrollbrett erforderlich, wieder auf den Nachteil der Arbeit mit der Doppelsymbolik hinzuweisen. Wie vorher schon dargelegt, werden nummerierte Aufgaben gelöst und ein der Aufgabennummerierung entsprechender Fallstift ausgewählt. Nach Lösung der Aufgabe muß - wie vorher schon erläutert - der Fallstift Nr. 17 der Ergebniszahl 18 zugeordnet werden. Diese zusätzliche Konzentration ist bei dem Lernenden mitunter noch nicht vorhanden und es kommt zu Fehlern. Da die Lochplatte 100 Löcher enthält, ist weiterhin zusätzliche Aufinerksamkeit gefordert beim Stecken der Löcher, wobei auf die richtigen Koordinaten zu achten ist.
Kritisch anzumerken ist noch, daß das Kontrollbrett kein in sich geschlossenes System darstellt. Zur Veränderung der Lösungsbereiche muß die Schablone eine neue Lage erhalten, was ein Auseinander- und wieder Zusammenbauen des Kontrollbrettes erforderlich macht.

Ausgehend von den recht ausführlichen Darlegungen zum Stande der Technik ist es daher die Aufgabe der Erfindung, einen didaktischen Lernhilfsapparat vorzuschlagen, bei dem die sofortige Selbstkontrolle durch die Übenden bzw. Spielenden erfolgt. Das Erkennen von Fehlern bei der Selbstkontrolle soll zu einem erneuten Überdenken der Aufgabe anregen und ein falsches Ergebnis soll nur durch Eigenleistung korrigiert und durch Nutzung des Lernhilfsapparates bestätigt werden. Eine Fehlerkorrektur soll durch "Schummeln" im weitesten Sinne vorher beschriebener Prinzipien nicht möglich sein. Die Nachteile der Arbeit mit der vorher beschriebenen gerätebedingten Doppelsymbolik bei den bekannten Kontrollgeräten sollen beseitigt werden. In diesem Sinne soll durch spielerische Aktivitäten bei einer vorgegebenen Aufgabe nach der Lösung die Selbstkontrolle erfolgen, ohne dabei zusätzlich nicht die Lösung charakterisierende Symbole verwenden zu müssen.
Erfindungsgemäß wird die Aufgabe wie folgt gelöst.
Der didaktische Lernhilfsapparat, vorzugsweise zur Anwendung in der Grundschule, besteht aus mehreren übereinander angeordneten Platten bzw. Scheiben. Auf einer Grundplatte sind übereinander angeordnet:
- eine Drehscheibe, künftig als Zehnerdrehscheibe bezeichnet
- eine Drehscheibe, künftig als Einerdrehscheibe bezeichnet
- eine Ist-Gleich-Scheibe
- eine Deckscheibe.

Zum Lernhilfsapparat gehören diverse Aufgabenfolien, die bei Benutzung des Lernhilfsapparates einzeln auf die Deckscheibe gelegt werden müssen.
Für die weitere Beschreibung des Lernhilfsapparates ist es leichter, wenn zuerst auf dessen Wirkungsweise eingegangen wird, um dann verständlicher den erfindungsgemäßen Aufbau darzulegen.
In der Aufgabenfolie (z.B. Einmaleins mit der 7) sind 10 Löcher den Aufgaben 1 x 7, 2 x 7, u.s.w. (nicht den Lösungen) zugeordnet
Eine Anzahl von Löchern in der Deckscheibe und in den anderen Scheiben sind verschiedenen Lösungen angeordnet, z.B. 7, 14 u.s.w. Die Zehnerdrehscheibe kann durch einfache Betätigung auf einer Skala arretiert werden, z.B. auf den Zehner 1 bei der Zahl 14, und dementsprechend kann die Einerdrehscheibe auf einer weiteren Skala bei dem Einer 4 arretiert werden bei der Zahl 14.
Die Kontrolle einer Lösung erfolgt, indem ein Fallstift in ein Loch der Aufgabenfolie (für die zu lösende Aufgabe) gesteckt wird und damit auch im darunter befindlichen Loch der Deckscheibe steckt. Entsprechend der bereits vollzogenen Lösung der Aufgabe wird die Zehner- und Einerdrehscheibe jeweils arretiert. Durch Anordnung der Löcher befinden sich bei richtiger Lösung nach Arretierung der Zehner- und Einerscheibe die Löcher von Aufgabenfolie, Deckscheibe, Einer- und Zehnerdrehscheibe und Grundplatte genau deckungsgleich untereinander. Nun erfolgt durch den Übenden der entscheidende Schritt, d.h. die Selbstkontrolle. Dazu wird die Ist-Gleich-Scheibe, die sich bisher in einer Verschlußposition befand, durch einfache Betätigung gegen einen Anschlag gedreht. Bei richtiger Lösung bewegt sich von der Ist-Gleich-Scheibe ein Loch in eine Position, welches durch Deckungsgleichheit das Fallen des Stiftes ermöglicht.
Der Aufbau des didaktischen Lernhilfsapparates soll nunmehr wie folgt weiter beschrieben werden.

Die Grundplatte und alle weiteren benannten Scheiben sind miteinander verbunden, zweckmäßigerweise mit einem Bauteil im Sinne einer Achse.

Die Einer- und Zehnerscheibe muß im Einer- und Zehner-Zahlenbereich der jeweiligen Skala horizontal drehbar gelagert sein.
Die Ist-Gleich-Scheibe braucht nur geringfügig horizontal drehbar gelagert sein, denn bereits eine geringe Abweichung von der Deckungsgleichheit verhindert das selbständige Fallen des Stiftes.

Die Aufgabenfolie ist trotz exaktem Sitz leicht austauschbar.

Die Anordnung der Löcher in den Aufgabenfolien soll möglichst nach einem bestimmten Schema erfolgen. Bei den Aufgabenfolien mit Divisionsaufgaben wurden beispielsweise die Divisionsreihen mit einem bestimmten Divisor immer jeweils in einem Viertel der Aufgabenfolie untergebracht.
Zur Anordnung der Löcher in der Deckscheibe ist festzustellen, daß jedes Loch einem bestimmten Ergebnis zugeordnet wurde. Da es für verschiedene Aufgaben auch gleiche Lösungen gibt und da nicht jede Lösung an der gleichen Stelle angeordnet werden kann (da die Aufgabenfolien Löcher nach einem bestimmten Schema haben sollen) ergeben sich für die Deckscheibe viele Möglichkeiten für die Anordnung und die Anzahl der Löcher. Nach folgenden Gesichtspunkten wurde bei der Anordnung der Löcher und den damit verbundenen Lösungen vorgegangen:
- Die Löcher dürfen sich auf der Deckscheibe (und damit auch auf den anderen Scheiben) nicht überschneiden oder decken.
- Der Durchlaß darf nur bei richtiger Lösung gegeben sein.
- Die Anordnung der Löcher in den Aufgabenfolien sollte weitgehend einem beabsichtigtem Schema entsprechen.

Es hat sich als vorteilhaft erwiesen, die Lösungslöcher auf der Deckscheibe und damit auf den anderen Scheiben nicht symmetrisch anzuordnen. Das gesamte Schema der Löcher von 0 bis 100 wird einige Millimeter vom Mittelpunkt der Deckscheibe verschoben. Damit kann beim Anordnen der Löcher in der Aufgabenfolie einfacher ein Überschneiden oder Decken der Löcher in der Deckscheibe verhindert werden.

Das Lernhilfsmittel ermöglicht auch eine Anwendung in anderen Fächern, wie z.B. Deutsch, Geographie. Eine Aufgabenfolie für das Fach Deutsch gibt beispielsweise 10 Wörter vor, wobei die Buchstaben s, ss, β freigelassen wurden. Vom Übenden ist zu entscheiden, ob das jeweilige Wort mit s, ss, oder β richtig geschrieben wird. Jeder Schreibmöglichkeit ist ein Loch in der Aufgabenfolie zugeordnet sowie jedem Loch eine Zahl von 0 bis 100. Wenn dem Buchstaben "s" auf der Aufgabenfolie die Zahl 61 zugeordnet ist, wird (wie vorher beschrieben) die Zehner- und Einerdrehscheibe betätigt. Das Einführen des Fallstifles in das richtige Loch, die Einstellung der Zehner- und Einerscheibe sowie die Betätigung der Ist-Gleich-Scheibe zeigt dem Übenden sofort, ob seine Kenntnisse richtig sind. Das bedeutet in diesem Falle: Wird das Wort mit "s" richtig geschrieben, bewegt sich der Fallstift. Korrekterweise soll hier angemerkt werden, daß beim Einsatz des didaktischen Lernhilfsapparates über das Fach Mathematik hinaus beim Einstellen der Einer- und Zehnerdrehscheibe allerdings ebenfalls mit einer Doppelsymbolik gearbeitet werden muß. Die Arbeit mit der Doppelsymbolik ist jedoch nicht gerätebedingt, sondern nur aufgabenbedingt. Damit kann der erfindungsgemäße Lernhilfsapparat im Fach Mathematik eingesetzt werden, ohne daß die Übenden mit der Doppelsymbolik arbeiten müssen. Soweit es dem Übenden mit bereits größerer Konzentration zugemutet werden kann, erfolgt der Einsatz des gleichen Apparates mit anderen Aufgabenfolien in anderen Fächern als im Fach Mathematik.
Der Lernhilfsapparat stellt ein in sich geschlossenes kompaktes System dar.

Die aufzulegende Aufgabenfolie ersetzt eine zusätzliche Aufgabensammlung.

Es soll noch hervorgehoben werden, daß ein Schummeln insofern nicht möglich ist, da erst die richtige Einstellung der Zehner- und Einerdrehscheibe die Voraussetzung für die Bewegung des Fallstiftes gibt. Die sofortige Kontrolle nach jeder Lösung ist zugleich Motivation zur weiteren Lösung von Aufgaben.

Wesentlich für die Erfindung ist jedoch die Verwendung einer Einer- und einer Zehnerdrehscheibe, um das gefundene Ergebnis entsprechend dem üblichen Rechenvorgang, nach Zehnern und Einem geordnet, einstellen zu können.

Die Erfindung soll nachfolgend an einem Ausführungsbeispiel erläutert werden. Es zeigen:
Figur 1 - Skizze des Lernhilfsapparates im Schnitt.
Figur 2a - 2f- Teile des Apparates
Figur 3a - 3d - zur Erläuterung der Wirkung

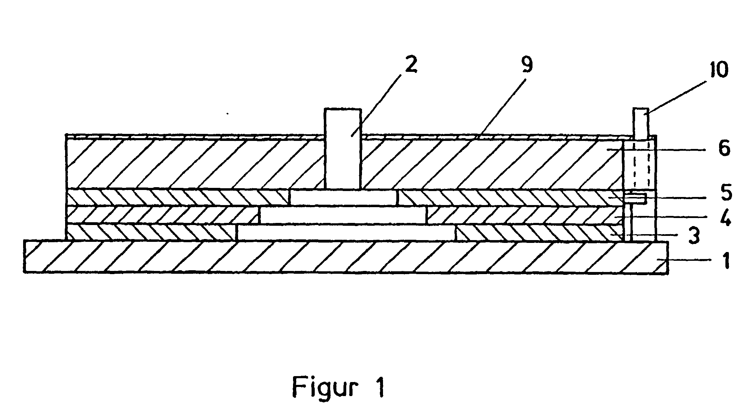

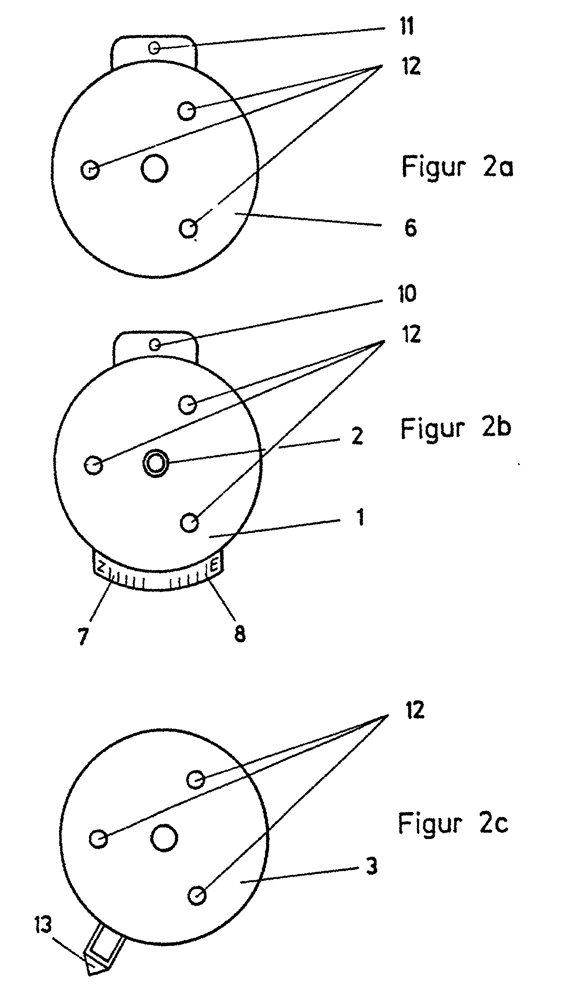

Entsprechend Figur 1 ist die Grundplatte 1 mit einer durch Absätze geprägten Achse 2 versehen. Auf der Grundplatte 1 sind übereinander die Zehnerdrehscheibe 3, die Einerdrehscheibe 4, die Ist-Gleich-Scheibe 5 und die Deckscheibe 6, angeordnet. Die Deckscheibe 6 sitzt fest auf der Achse 2 (eventuell zusätzliche Befestigung durch Arretierung) während sich die Zehnerdrehscheibe 3 im Bereich der Zehnerskala 7 (siehe Fig. 2b), die Einerdrehscheibe 4 im Bereich der Einerskala 8 (siehe Fig. 2b) bewegen lassen. Die Ist-Gleich-Scheibe 5 hat die darunter befindlichen Scheiben im gewissen Maße abzudecken und kann um einige Grad gedreht werden.

Die Aufgabenfolien 9 für die verschiedenen Aufgaben oder zum Testen von Allgemeinwissen werden so auf die Deckscheibe 6 gelegt, daß sie mit Hilfe eines Bolzens 10, (eventuell zweckmäßigerweise noch an einem weiteren Punkt außer dem Mittelpunkt) arretiert werden. Der Fallstift ist mit Positionszeichen 18 bezeichnet.

Figur 2a zeigt die Deckscheibe 6 mit einem zusätzlichen Loch 11 zur Arretierung. Mit Positionszeichen 12 sind 3 Lösungslöcher bezeichnet (der Einfachheit halber sind nur 3 Lösungslöcher eingezeichnet).

Figur 2b zeigt die Grundplatte 1 mit der Skaleneinteilung, d.h. Zehnerskala 7 und Einerskala 8, sowie den Bolzen 10 zur Arretierung der Deckscheibe 6.

Figur 2c zeigt die Zehnerdrehscheibe 3 mit einem Betätigungsgriff 13. Ein Zeiger für die Einstellung auf die Zehnerskala 7 gehört zur Zehnerdrehscheibe.

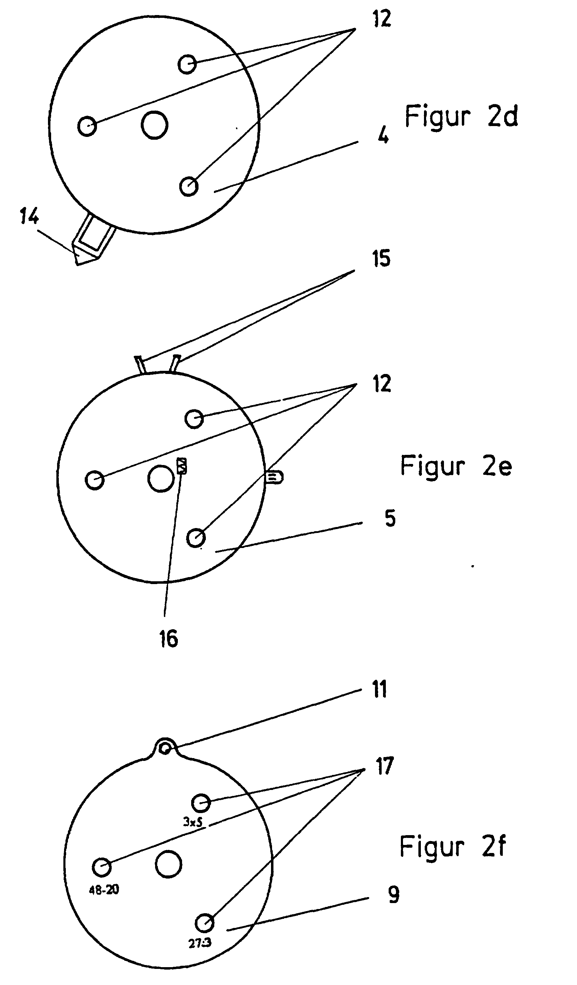

Figur 2d zeigt die Einerdrehscheibe 4 mit Betätigungsgriff 14. Weiterhin wird auf die Ausführung zu Figur 2c verwiesen.

Figur 2e zeigt die Ist-Gleich-Scheibe 5 mit Anschlägen 15 für die Begrenzung der Drehung der Scheibe und einer Aussparung für eine Feder 16, die nach Entnahme des Fallstiftes aus einem der Löcher 12 die Ist-Gleich-Scheibe 5 in die Ausgangsposition (Verdecken) zurückholt.

Figur 2f zeigt eine Aufgabenfolie 9 mit Löchern für die Aufgaben, d.h. mit Aufgabenlöchern 17. Es sind nur 3 Aufgaben (nicht schematisch geordnet) angedeutet.

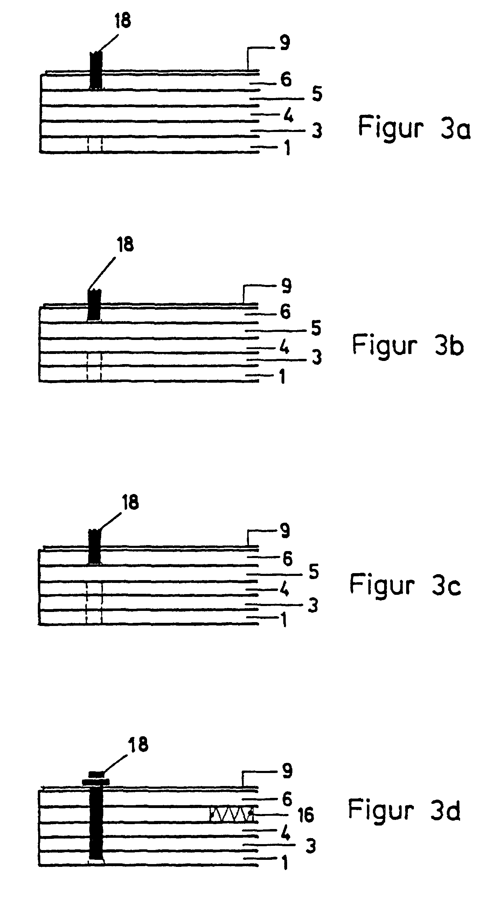

Das Wirkungsprinzip ergibt sich damit aus den Figuren 3a bis 3d.

Zu Figur 3a: Der Fallstift 18 wird durch ein Loch der Aufgabenfolie 9 in ein Loch der Deckscheibe 6 gesteckt.

Zu Figur 3b: Mit der Zehnerdrehscheibe 3 wird die Lösung für den Zehner eingestellt. Das Loch bewegt sich bei richtiger Lösung genau unter den Fallstift 18.

Zu Figur 3c: Mit der Einerdrehscheibe 4 wird die Lösung für den Einer eingestellt. Das Loch bewegt sich ebenfalls unter den Fallstift 18 und ist somit mit allen darüber und darunter liegenden Löchern, außer mit dem in der Ist-Gleich-Scheibe 5, deckungsgleich.

Zu Figur 3d: Die zuletzt betätigte Ist-Gleich-Scheibe 5 gibt den Weg bei richtiger Lösung für den Fallstift 18 frei, welcher bis zum Anschlag in die deckungsgleichen Löcher aller Scheiben fällt. Nach dem Herausziehen des Fallstiftes verschließt die Ist-Gleich-Scheibe 5 durch die Feder 16 alle Aufgabenlöcher selbständig.

Die bisherigen Erläuterungen bringen zum Ausdruck, daß der Lernhilfsapparat im Grundriß eine Kreisform hat. Es kann auch jeder andere Grundriß zur Anwendung kommen, z.B. statt eines Kreises eine Blume oder ein beliebiges Muster.

## Patentansprüche

1. Didaktischer Lernhilfsapparat, vorzugsweise zur Anwendung in der Grundschule, wobei sich Lochscheiben mit unterschiedlichen Funktionen auf einer Grundplatte befinden und ein Fallstift Verwendung findet, **dadurch gekennzeichnet, daß** die Scheiben des Lernhilfsapparates derart angeordnet sind, daß sich über der Grundplatte (1), die am äußeren Umfang mit einer Skala mit Einer- und Zehnereinteilung versehen ist, eine Zehnerdrehscheibe (3) mit Betätigungsgriff (13), eine Einerdrehscheibe (4) mit Betätigungsgriff (14), eine Ist-Gleich-Scheibe (5) und eine Deckscheibe (6) befinden, zum Lernhilfsapparat Aufgabenfolien (9) mit Aufgabenlöchern (17) gehören, bei Benutzung des Lernhilfsapparates eine Aufgabenfolie (9) auf der Deckscheibe (6) plaziert ist und bei richtiger Lösung einer Aufgabe nach entsprechender Einstellung der Zehnerdrehscheibe (3) und der Einerdrehscheibe (4) und Betätigung der Ist-Gleich-Scheibe (5) in der Grundplatte (1) und den darüberliegenden Scheiben (3, 4, 5, 6) und der Aufgabenfolie (9) angeordnete Löcher deckungsgleich sind, so daß dem Fallstift (18) von einem bestimmten Aufgabenloch (17) in der Aufgabenfolie (9) eine ungehinderte Abwärtsbewegung bis zur Grundplatte (1) ermöglicht wird.

2. Lemhilfsapparat nach Anspruch 1, **gekennzeichnet dadurch, daß** die Zehnerdrehscheibe (3) und die Einerdrehscheibe (4) horizontal im Bereich der Zehnerskala (7) bzw. Einerskala (8) drehbar angeordnet sind zwecks Zehner- und Einerstellung.

3. Lernhilfsapparat nach Anspruch 1, **gekennzeichnet dadurch, daß** die Aufgabenlöcher (17) und die Lösungslöcher (12) im Grundriß nicht symmetrisch angeordnet sind.

4. Lernhilfsapparat nach Anspruch 1, **gekennzeichnet dadurch, daß** eine Feder (16) als Rückholeinrichtung so verwendet wird, daß nach Entnahme des Fallstiftes (18) die Ist-Gleich-Scheibe (5) selbsttätig in die Ausgangsposition zurückkehren kann.

5. Lernhilfsapparat nach Anspruch 1, **gekennzeichnet dadurch, daß** die Aufgabenfolien (9) bzw. die Deckscheibe (6) einen beliebigen Grundriß aufiveisen.

## Claims

1. Didactic learning aid, preferably for use in elementary school, consisting of several punched disks with different functions mounted on a base plate and a drop pin **characterized in that** over the base plate (1), which has a circumferential graduated edge with unit and tens digits displayed, the disks of this learning aid are arranged in such a way to include a rotating tens-digits disk (3) with operating handle (13), a rotating unit-digits disk (4) with operating handle (14), a results disk (5) and a covering disk (6), and that the learning aid is completed with a maths question film (9) in which are punched question holes (17), and that when using the learning aid a maths question film (9) is placed onto the covering disk (6), and that after correct answering the question by rotating the tens-digits disk (3) and unit-digits disk (4) into the right positions, and adjusting the results disk (5) correspondingly, the holes provided in the base plate (1) and in the rotating disks (3, 4, 5, 6) over that base plate as well as in the maths question film (9) are congruent so that the drop pin (18) is able to unhinderedly move downwards through a certain question hole (17) in the maths question film (9) to the base plate (1).

2. Learning aid according to claim no. 1, **characterized in that** both the rotating tens-digits disk (3) and the rotating unit-digits disk (4) are arranged so that they can be rotated to set to the desired unit-digits and tens-digit displayed on the unit digits scale (8) and/or tens digits scale (7).

3. Learning aid according to claim no. 1, **characterized in that** the question holes (17) and answer holes (12) are not arranged symmetrically in horizontal projection.

4. Learning aid according to claim no. 1, **characterized in that** a spring (16) is used as a return motion device in such a way that after removing the drop pin (18) the results disk (5) is allowed to automatically return into its starting position.

5. Learning aid according to claim no. 1, **characterized in that** either the maths question films (9) and the covering disk (6) may have any plan projection whatever.

## Revendications

1. Appareil didactique auxiliaire, à utiliser de préférence à l'école primaire élémentaire, avec lequel des disques perforés de différentes fonctions se trouvent sur un disque de base et où une goupille à chute est utilisée, **caractérisé par le fait que** les disques de l'appareil auxiliaire sont disposés de telle manière qu'au-dessus du disque de base (1) qui comporte sur sa circonférence extérieure une échelle avec division en unités et en dizaines, un disque tournant des dizaines (3) doté d'une poignée de déplacement (13), un disque tournant des unités (4) doté d'une poignée de déplacement (14), un disque est-égal-à (5) et un disque de recouvrement (6), des feuilles de données de problème (9) avec des trous de données de problème (17) font partie de l'appareil auxiliaire, en utilisant l'appareil auxiliaire une feuille de données de problème (9) est disposée sur le disque de recouvrement (6) et en cas de résolution d'un problème après avoir bien placé de disque des dizaines(3) et le disque des unités (4) et avoir actionné le disque est-égal-à (5) les trous perforés dans le disque de base (1), dans les disques qui lui sont superposés (3, 4, 5, 6) et dans la feuille de données de problème (9) correspondent, si bien que la goupille de chute (18) peut descendre librement d'un certain trou de données de problème (17) de la feuille de données de problème (9) jusqu'au disque de base (1).

2. Appareil didactique auxiliaire selon la revendication 1, **caractérisé par le fait que** le disque tournant des dizaines (3) et le disque tournant des unités (4) sont disposés horizontalement dans le domaine de l'échelle des dizaines (7) et respectivement de l'échelle des unités (8) pour pouvoir être tournés pour la position des dizaines et des unités.

3. Appareil didactique auxiliaire selon la revendication 1, **caractérisé par le fait que** les trous des données de problème (17) et les trous de solution (12) ne sont pas disposés de manière symétrique dans le plan.

4. Appareil didactique auxiliaire selon la revendication 1, **caractérisé par le fait qu'**un ressort (16) est utilisé comme dispositif de rappel de manière à ce que lorsque la cheville de chute (18) est retirée le disque est-égal-à (5) retourne automatiquement dans sa position dé départ.

5. Appareil didactique auxiliaire selon la revendication 1, **caractérisé par le fait que** les feuilles de données de problème (9) et le disque de recouvrement (6) présentent un plan quelconque.
